# EUROPEAN PATENT APPLICATION

(11) **EP 1 840 781 A1**
(43) Date of publication of application: **03.10.2007**
(21) Application number: 07000881.8
(22) Date of filing: 17.01.2007
(51) Int. Cl.: G06F 21/00

(54) **System, device, method and computer program for transferring content**

(30) Priority: 25.01.2006 JP 2006015886
(71) Applicant: Sony Corporation, Tokyo (JP)
(72) Inventor: Nakano, Takehiko, Shinagawa-ku Tokyo (JP); Shima, Hisato, Shinagawa-ku Tokyo (JP); Takabayashi, Kazuhiko, Shinagawa-ku Tokyo (JP); Igarashi, Tatsuya, Shinagawa-ku Tokyo (JP); Hayashi, Morihiko, Shinagawa-ku Tokyo (JP)
(74) Representative: Müller - Hoffmann & Partner

(57) **Abstract**

A content transfer system includes a source device transmitting content and a sink device receiving the content. The sink incrementally validates portions of data of the content received from the source device. The source device incrementally invalidates the portions of the data of the content transmitted therefrom in order to move the content from the source device to the sink device.

## Description

### CROSS REFERENCES TO RELATED APPLICATIONS

The present invention contains subject matter related to Japanese Patent Application JP 2006-015886 filed in the Japanese Patent Office on January 25, 2006, the entire contents of which are incorporated herein by reference.

### BACKGROUND OF THE INVENTION

### 1. Field of the Invention

The present invention relates to a system, device, method, and computer program for transferring content such as digital audio-visual data between devices and, in particular, to a system, device, method, and computer program for encrypting and transferring the content between the devices in a copy controlled manner for copyright protection and any other purposes.

### 2. Description of the Related Art

Digital content data is subject to unauthorized manipulation, for example, can be relatively easily copied or tampered. Protection of the content from unauthorized use is necessary while permitting the content to be used personally or at home. In the Japanese domestic market, analog broadcast TV receivers are currently rapidly replaced with digital broadcast TV receivers in view of the decommissioning of the terrestrial analog TV broadcasting service expected in 2011. It is thus vitally important to technically protect digital AV contents in home applications.

In Japan, digital broadcast technical specifications have been formulated chiefly by the Association of Radio Industries and Businesses (ARIB) in Japan. The ARIB has adopted MPEG 2 system (ISO/IEC 13818-1 Generic Coding of Moving Pictures and Associated Audio: Systems Recommendation H. 222.0) for digital satellite broadcast, digital terrestrial broadcast, and digital cable-television broadcast service. The ARIB has required that a "one-generation copy control function" (such as copy once) be introduced to protect contents and has formulated strict copyright protection clauses in specifications (Operational Guide-lines for Terrestrial Digital Broadcasting System ARIB TR-B14, and Operation Guide-lines for BS (Broadcasting Satellite)/Broadband CS (Communications Satellite) Digital Broadcasting System ARIB TR-B15).

Available as world standards for protection of digital content is the digital transmission content protection (DTCP) specification standardized by the digital transmission licensing administrator (DTLA), for example. That specification formulates a mechanism that allows content to be transmitted in a manner such that the copyright of the content is protected with copying controlled (DTCP Specification Volume 1 Revision 1.4

### (Informational Version) http://www.dtcp.com/).

The DTCP specification defines an authentication protocol for content transmission between devices, and a transmission protocol of encrypted content. In accordance with the DTCP specification, a source device providing content and a sink device receiving the content share a key through an authentication process, and transfer the content by encrypting a transmission path using the key. Without completing the authentication process with the source device successfully, an unauthorized sink device cannot acquire an encryption key, and thus the content.

The DTCP specification defines the transmission of digital contents over a home network using an IEEE 1394 transmission path. Recently, a movement to distribute digital AV contents via an IP network in home applications, such as digital living network alliance (DLNA), shifts into high gear. DTCP-IP technology coping with the IP network (DTCP mapping to IP) is actively developed.

In accordance with the DTCP-IP specification, a content transfer protocol such as the hyper text transfer protocol (HTTP) or the real-time protocol (RTP) may be used. For example, when content is transmitted in accordance with the HTTP algorithm, a source device becomes an HTTP server and a sink device becomes an HTTP client. A TCP/IP connection is produced for HTTP, and encrypted content is transferred. If a home network is linked to an external IP network via a router, the content can be intercepted, altered or illegally copied. The DTCP-IP specification provides another method for transferring contents while protecting the contents (DTCP Volume 1 Supplement E Mapping DTCP IP, Revision 1.1

### (Informational Version) http://www.dtcp.com/).

To transmit contents in a copyright protected manner, content attributes related to content protection need to be specified. The DTCP-IP provides two mechanisms to allow copy control information incidental to the content to be transmitted, namely, extended encryption mode indicator (E-EMI) described in a header portion of a packet for content transmission (PCP) and embedded copy control information (CCI).

The CCI, when transmitted, is embedded in a payload of the packet. If the content stream is tampered, an erroneous decryption results. The integrity of the embedded CCI is thus assured. On the other hand, E-EMI is described in a header portion of a plain text and provides copy control information related to the content stream. E-EMI permits easy access while maintaining security. E-EMI is composed of a 4-bit field describing encrypt mode, and the value of E-EMI shows seven types of copy control information. The definitions of bit values are listed in the following Table. Unused nine E-EMI values are reserved for future use.

**Table**

| E-EMI values | Encrypt mode | Copy Control Information |
|---|---|---|
| 1100 | A0 | Copy never (CN) |
| 1010 | B1 | Copy-one-generation (COG) (recordable on cognizant device) |
| 1000 | B0 | Copy-one-generation(COG) (recordable on non-cognizant device) |
| 0110 | C1 | Move mode (audio visual) |
| 0100 | C0 | No-more-copies (NMC) |
| 0010 | D0 | Copy-free with EPN asserted (CF/EPN) |
| 0000 | N.A. | Copy-free (CF) |

A device operating as a source device selects a correct encrypt mode in accordance with characteristics of a content stream, and sets up E-EMI based on the encrypt mode. A device operating as a sink device selects the correct encrypt mode specified by E-EMI in the header of the packet of the transmitted content. Furthermore, the device as the sink device encrypts the received content as specified by one of E-EMI and embedded CCI and temporarily stores the encrypted content. When the device as the sink device operates as a source device, the device controls secondary content transfer operation in accordance with the copy control information. The types of copy control are listed below:
Copy free: copyright is reserved but copy control using DTCP is not performed;
Copy never: Any contents are never copied;
Copy one generation: Copying is performed once (for one generation); and
No more copies: Copying is permitted no longer.

The no more copies state results when content set in the copy one generation is copied (in a first generation). The DTCP-IP provides a move function as means for transferring a encrypted content with no more copies state set therein. The move of the content is permitted on condition that the sink device handles the received content as content encrypted in a no more copies state and that the source device deletes the original content or inhibits the original content (DTCP Specification Volume 1 Revision 1.4 (Informational Version) http://www.dtcp.com/, and Digital Transmission Protection License Agreement, Adopter Agreement - May 2005). For example, the content of copy one generation may be encrypted and recorded as a no more copies content in a source device as a personal video recorder (PVR). The move function permits the content to be encrypted in the copy one generation and then transmitted to a single sink device with the above requirement satisfied.

In accordance with the current specification, the move transmission may be permitted using any of the C1 mode and the B1 mode in E-EMI. The sink device decrypts the content in accordance with the AKE algorithm using one of these modes, and records the decrypted content. The source device needs to invalidate the data at the moment of the transmission.

If a move process of the content from the source device to the sink device is composed of a plurality of data transfer sequences, the requirement that the source device delete the content or inhibit the use of the content must be consistently satisfied throughout all the move transfer sequences. For example, Japanese Unexamined Patent Application Publication No. 2003-101529 discloses a content management device. The device divides content into a plurality of segments, encrypts the segments with different title keys, extracts a time varying key for use in decrypting the content, and successively overwrites the original title key in a title key area with the extracted time varying key, thereby making the decrypting of the content impossible. The original content with the copy thereof moved is safely and efficiently deleted.

When the move process is interrupted between the source device and the sink device due to a failure during content transmission, the content can be fragmented at each of the source device and the sink device. The right to the content is safely transferred between the source device and the sink device if the transmission of the entire content is successfully completed. If any failure takes place in the middle of the transmission process, a portion of data already transmitted is present at the sink device with a portion of untransmitted data remaining at the source device. The content is thus fragmented. The failures that could happen in the move transfer process include a connection error, a power failure in one device, a removal of a medium having the content stored thereon (a failure in a storage), a storage storing the content at the sink device becoming full, etc.

Japanese Unexamined Patent Application Publication No. 2005-158056 discloses a content transfer system. In the disclosed content transfer system, a content move controller is arranged between a source device and a sink device, both performing content transfer via a general-purpose bus. The DTCP specification requires that an amount of reproducible content present in duplication in both the source device and the sink device during the move transfer process should not exceed a reproduction time of 1 minute. Upon detecting a failure in one of the source device and the sink device, the content move controller interrupts the move transfer process within one minute, and resumes the move transfer process on a portion remaining in a reproducible state at the source device. The disclosed content transfer system thus avoids content missing. In this case, however, the use of the content move controller leads to an increase in device costs. The move transfer process may be initiated in an adhoc manner between any source device and any sink device on a wireless local-area network (LAN). In such a case, the content move controller cannot be installed, or the content move controller, if installed, presents a bottle neck in the transfer sequence.

Japanese Unexamined Patent Application Publication No. 2005-293731 discloses a content recording system. In the disclosed content recording system, a source device deletes original content corresponding to content transmitted to a sink device with reference to content recording status information returned from the sink device that has completed the reception of the content. The content recording system thus prevents the content at the source device from missing when the sink device fails to record the content normally. However, this system pays little attention to the fragmentation of the content between the source device and the sink device in response to an interruption of the content transfer.

Japanese Unexamined Patent Application Publication No. 2005-250567 discloses a content data handling device. The content data handling device encrypts copy data with the copy encrypt key thereof and stores the encrypted copy data when the copyright protected data is moved to another device. If the moved data becomes destroyed in the event of a failure in the data transfer, the content data handling device invalidates the moved data while restoring the original data from the copy data. The missing of the original data is thus prevented while the copyright is protected. The content data handling device deletes the original data after the data is recorded on the destination or in parallel with the recording of the moved data on the destination. However, the content handling device incorporates no sufficient preventive step to prevent the fragmentation of the content taking place between the source device and the sink device in response to an interruption of the content transfer.

If the content is regarded as being not yet moved regardless of the fragmentation of the content taking place between the source device and the sink device in response to an interruption of the content transfer, any portion of the content already moved to the sink device can be used. This puts a copyright holder at a disadvantage. Conversely, if the content is regarded as being already moved, the user has a disadvantage because the sink device cannot use the entire content.

If the move process has not been completed successfully, an undo step (to undo the performed move process) or a resume step (to resume the remaining portion of the move process) is contemplated.

A device able to receive data in a usable state only (namely, unable to record the data in an unusable state) can undo only if the received data can be made unusable. If the data received at the sink device is recorded on a storage that permits one-time successive write only, the storage cannot be restored to an unwritten state. If the move process is interrupted due to a failure in the apparatus, no resume process can be performed.

### SUMMARY OF THE INVENTION

It is thus desirable to provide a system, device, method, and computer program for appropriately performing transfer procedure of encrypted content between DTCP compliant information devices.

It is also desirable to provide a system, device, method, and computer program for appropriately moving content from a source device to a sink device through a move function.

It is also desirable to provide a system, device, method, and computer program for appropriately handling data already received at the sink device in a manner fair to both the content copyright holder and the user.

In one embodiment of the present invention, a content transfer system includes a source device for transmitting content and a sink device for receiving the content. The sink device incrementally validates portions of data of the content received from the source device, and the source device incrementally invalidates the portions of the data of the content transmitted therefrom in order to move the content from the source device to the sink device.

The term "system" refers to a logical set of a plurality of devices (or functional modules performing particular functions), and does not necessarily mean that the devices or the functional modules are housed in a single casing.

The present invention relates to a content transfer system for transmitting content requiring copyright protection over an IP network. More specifically, the present invention relates to a content transfer system for transmitting encrypted contents in a secure manner using a key shared through an authentication and key exchange process among information terminals complying with the digital transmission content protection - Internet protocol (DTCP-IP) specification.

Two methods to transfer the content are available: a copy method and a move method. Content at a source device is copied to a sink device in the copy method while content at the source device is moved to the sink device with no original content remaining at the source device in the move method. The DTCP-IP specification provides the move function. In the move function, the sink device encrypts the received content as a no more copies content, and the source device transmits the encrypted content in a no more copy state on condition that the original content subsequent to the transfer of the copy thereof is deleted or inhibited in use.

However, if the content transfer process is interrupted between the source device and the sink device due to a communication failure, fragmented portions of the content remain in the source device and the sink device. In the case of an unsuccessful ending of the move process, an undo step (to undo the performed move process) or a resume step (to resume the remaining portion of the move process) may be performed. There are cases when such steps cannot be used.

The content transfer system of one embodiment of the present invention provide a mechanism in which the sink device incrementally validates each portion of the data received from the source device while the source device invalidates each portion of the data transmitted to the sink device. The right to the data is transferred to the sink device each time the sink device receives the portion of the data of the content.

A mechanism for moving data of the content on a portion by portion basis or on a stepwise basis has been introduced. Even if the move process is interrupted due to any failure, the data already received by the sink device is handled in a manner fair to each of the content copyright holder and the user.

If the sink device is able to invalidate at least a portion of the data of the content received from the source device and then validated, the sink device invalidates the portion of the data and issues a request to cancel the move of the data. The source device validates once invalidated data in response to the request to cancel the move of the data, thereby restoring the content to the state prior to the move thereof.

If the source device invalidates the data immediately subsequent to the transmission of the data to the sink device, data missing can take place at the sink device due to a connection error or a power failure in the middle of a data transfer transaction. The source device may invalidate transmitted data in response to a predetermined commitment process from the sink device indicating that the sink device has received the data.

More specifically, the sink device may transmit a reception acknowledgement command specifying a range of data that has been received from the source device and validated. The source device may invalidate the specified range of data in response to the reception acknowledgment command.

The content is moved in a stepwise manner through the commitment process. The source device does not invalidate the data without performing the commitment process. Data is thus free from missing due to a connection error, for example. Even if power of each device is switched off during a transfer transaction, the data is prevented from missing by storing data prior to the commitment process in a non-volatile storage area.

In accordance with one embodiment of the present invention, a computer readable program for causing a computer system as a DTCP compliant source device to transmit content to move the content to a sink device, includes an authentication step of performing an authentication and key exchange (AKE) process with the sink device, a data transfer step of encrypting and transmitting data of the content to the sink device using a key exchanged in the authentication step, and a data invalidating step of incrementally invalidating portions of the content data transmitted in the data transfer step.

In accordance with one embodiment of the present invention, a computer readable program for causing a computer system as a DTCP compliant sink device to receive content to move the content from a source device, includes an authentication step of performing an authentication and key exchange (AKE) process with the source device, a data receiving step of receiving data of the content from the source device using a key exchanged in the authentication step, and a data validating step of validating incrementally portions of the content data received in the data receiving step.

In accordance with embodiments of the present invention, the computer program is described in a computer readable format so that a predetermined process is performed on a computer system. The computer program is installed on the computer system and functions as each of the source device and the sink device in the above-described content transfer system in cooperation with the computer system. The content transfer system, constituting a DTCP based network, operates in the same manner as described above.

One embodiment of the present invention provides a system, device, method, and computer program for appropriately perform a transfer process of encrypted content between DTCP compliant information devices.

One embodiment of the present invention provides a system, device, method, and computer program for appropriately moving content from a source device to a sink device using a move function.

One embodiment of the present invention provides a mechanism for allowing the sink device to incrementally use already received data (the right to data is transferred to the sink device each time the data is received by the sink device) when the content is moved. Even if the move process is interrupted for any reason, the data already received by the sink device is handed in a manner fair to both the content copyright holder and the user.

These and other features, and advantages of the present invention will become obvious from the following detailed description of the embodiments of the present invention in conjunction with the accompanying drawings.

### BRIEF DESCRIPTION OF THE DRAWINGS

Fig. 1 diagrammatically illustrates an information communication system in accordance with one embodiment of the present invention;
Fig. 2 illustrates a functional configuration of an information communication device functioning as a sink device in the information communication system of Fig. 1;
Fig. 3 illustrates a functional configuration of an information communication device functioning as a source device in the information communication system of Fig. 1;
Fig. 4 illustrates an authentication and key exchange (AKE) process between the source device and the sink device and a mechanism for transferring encrypted content using the shared key exchanged in the AKE process;
Fig. 5 diagrammatically illustrates a data structure of a protected content packet (PCP);
Fig. 6 illustrates a padding process to a PCP payload;
Fig. 7 diagrammatically illustrates a content transfer sequence to allow the sink device for using moved data immediately subsequent to reception;
Fig. 8 diagrammatically illustrates a content transfer sequence for using moved data immediately subsequent to reception (in the event of any failure in the middle of the sequence);
Fig. 9 diagrammatically illustrates a content transfer sequence for canceling a move process at time point x of received data;
Fig. 10 diagrammatically illustrates a content transfer sequence for allowing the sink device to use the moved data immediately subsequent to the reception thereof;
Fig. 11 is a flowchart illustrating a process of the source device that downloads the content to the sink device in an immediate incremental move transfer;
Fig. 12 is a flowchart illustrating a process of the sink device that downloads the content from the source device in the immediate incremental move transfer;
Fig. 13 is a flowchart illustrating a process of the source device that uploads the content to the sink device in the immediate incremental move transfer;
Fig. 14 is a flowchart illustrating a process of the sink device that uploads the content from the source device in the immediate incremental move transfer;
Fig. 15 diagrammatically illustrates a content transfer sequence for allowing the sink device to use the received data subsequent to the completion of a commitment process to the source device;
Fig. 16 diagrammatically illustrates a content transfer sequence for allowing the sink device to use the received data subsequent to the completion of the commitment process to the source device (in the event of a failure);
Fig. 17 diagrammatically illustrates a content transfer sequence for allowing the sink device to use the received data subsequent to the completion of the commitment process to the source device (in order to undo the move transfer);
Fig. 18 is a flowchart illustrating a process of the source device that downloads the content to the sink device in a commitment incremental move transfer;
Fig. 19 is a flowchart illustrating a data invalidating process that the source device performs in parallel with the commitment incremental move transfer;
Fig. 20 is a flowchart illustrating a process of the sink device that downloads the content from the source device in the commitment incremental move transfer;
Fig. 21 is a flowchart illustrating a data invalidating process that the sink device performs in parallel with the commitment incremental move transfer;
Fig. 22 is a flowchart illustrating a process of the source device that uploads the content to the sink device in the commitment incremental move transfer;
Fig. 23 is a flowchart illustrating a process of the sink device that uploads the content from the source device in the commitment incremental move transfer;
Fig. 24 illustrates a DTCP-IP authentication section that makes once validated content data unusable;
Fig. 25 illustrates a content buffer block; and
Fig. 26 illustrates an example of frame format of OK and cancel commands.

### DESCRIPTION OF THE PREFERRED EMBODIMENTS

The present invention relates to a content transfer system for encrypting and transmitting, in accordance with predetermined copy control information, content requiring protection for copyright purposes or any other purposes. One of specific examples of such systems is a content transmission system using a hyper text transmission protocol (HTTP) protocol performed between digital transmission content -Internet protocol (DTCP-IP) complaint devices. The embodiments of the present invention are described below with reference to the drawings.

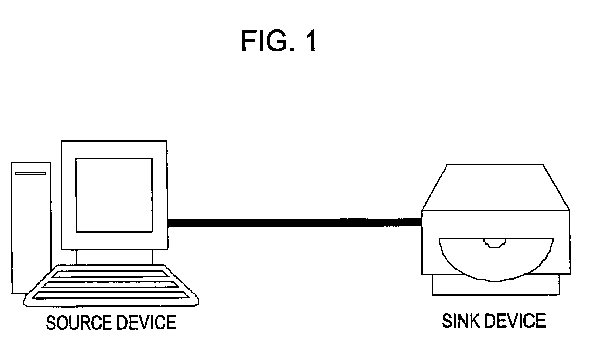

The DTCP-IP content transfer system includes a source device operating as a server transmitting content in response to a request to send the content, and a sink device operating as a client receiving, reproducing or recording the content. Fig. 1 illustrates an information communication system of one embodiment of the present invention.

As shown in Fig. 1, an authentication and key exchange (AKE) system includes a source device as a digital transmission content protection - Internet protocol (DTCP-IP) authentication server and a sink device as a DTCP-IP authentication client connected to the source device via a network. The network herein refers to Ethernet^{®}, the Internet or other network. The sink device and the source device establish a connection over a transmission control protocol / Internet protocol (TCP/IP) network, and performs an authentication process and a content transfer process using the connection.

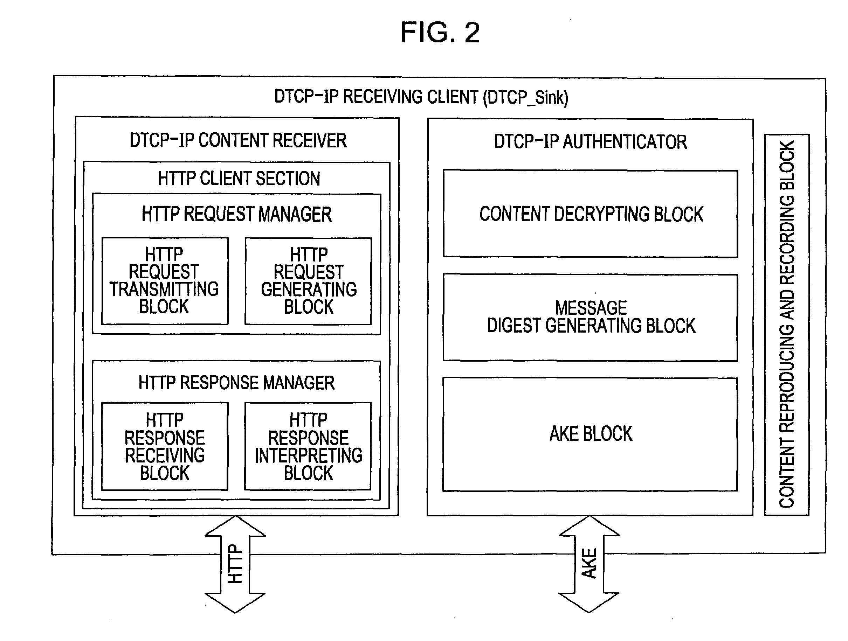

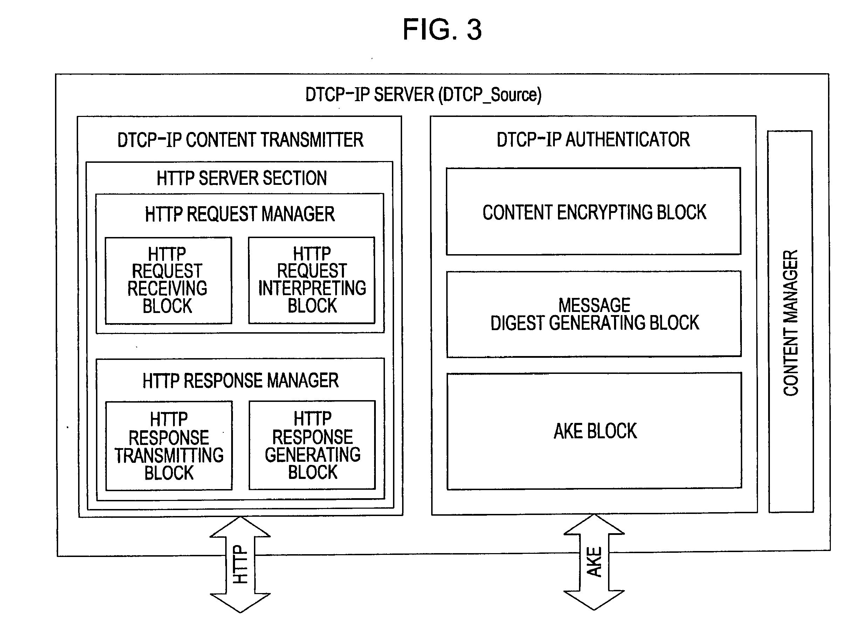

Figs. 2 and 3 diagrammatically illustrate, in terms of authentication and content transfer, functional configurations of a content transfer device functioning as each of the sink device and the source device in the content transfer system of Fig. 1.

The sink device of Fig. 2 includes a DTCP-IP authenticator, a DTCP-IP content receiver, and a content reproducing and recording block.

The DTCP-IP authenticator includes an AKE block, a message digest generating block, and a content decrypting block. Preferably, the DTCP-IP authenticator features tamper resistance.

The AKE block includes an AKE mechanism (at the sink device) in the DTCP-IP specification. The AKE block has a function of providing a parameter requested by the message digest generating block to be discussed later.

The message digest generating block generates a message digest of the parameter in accordance with a specified algorithm, such as MD5 or SHA-1. The message digest generating block is closely arranged with the AKE block so that the message digest generating block can generate a message digest of the parameter which is held by the AKE block and should not be disclosed to outside the DTCP-IP authenticator.

The content decrypting block calculates a decrypting key K_{c} using key Kₓ exchanged through the authentication and key exchange (AKE) process, and the DTCP-IP content receiver decrypts the encrypted content received from the source device with the decrypting key K_{c}. The content decrypted is transferred to the content reproducing and recording block.

During reproduction mode, the content reproducing and recording block reproduces the content transferred from the content decrypting block, and during recording mode, the content reproducing and recording block recodes the content onto a hard disk or any other recording medium (not shown). The recording operation of the content is performed under the control of rule defined in the copy control information inserted in a packet PCP for content transfer.

The DTCP-IP content receiver is a process module performing a content transfer process with the source device subsequent to the AKE process. As shown, the DTCP-IP content receiver includes an HTTP client section, and as an HTTP client, requests a content from an HTTP server (i.e., source device), and receives the content in reply from the HTTP server. The HTTP client section includes an HTTP request manager and an HTTP response manager.

The HTTP request manager includes an HTTP request transmitting block and an HTTP request generating block. The HTTP request generating block generates a content transmission request (HTTP request) to be transmitted. The HTTP request transmitting block transmits the HTTP request generated by the HTTP request generating block to the HTTP server.

The HTTP response manager includes an HTTP response receiving block and an HTTP response interpreting block. The HTTP response receiving block receives an HTTP response and the encrypted content returned from the server. The HTTP response interpreting block checks the received HTTP response. If the check result is affirmative, the received encrypted content is transferred to the content decrypting block in the DTCP-IP authenticator. If the check result is non-affirmative, an error response process is performed. The HTTP response from the source device includes at least one PCP.

The DTCP-IP authenticator and the DTCP-IP content receiver respectively establish a TCP/IP connection with the server, and independently perform an authentication process and a content transfer process.

A source device of Fig. 3 includes a DTCP-IP authenticator, a DTCP-IP content transmitter, and a content manager.

The DTCP-IP authenticator includes an AKE block, a message digest generating block, and a content encrypting block. Preferably, the DTCP-IP authenticator is tamper resistant.

The AKE block has an AKE mechanism (source device) defined in the DTCP-IP specification. The AKE block has a function of providing a parameter (to be discussed later) requested by the message digest generating block. The AKE block stores information related to the sink device. The number of pieces of information is equal to the number of devices authenticated. When content is requested by a client, the information stored on the AKE block is used to determine whether that client has been already authenticated.

The message digest generating block generates a message digest of the parameter in accordance with a specified algorithm, such as MD5 and SHA-1. The message digest generating block is closely arranged with the AKE block so that the message digest generating block can generate a message digest of the parameter which is held by the AKE block and should not be disclosed to outside the DTCP-IP authenticator.

The content encrypting block encrypts the content, read from the content manager, in response to a request from the DTCP-IP content transmitter using a content key K_{c} generated from a key Kₓ exchanged through authentication and key exchange (AKE). The content encrypted here is supplied to the DTCP-IP content transmitter in order to be transmitted to the sink device.

The content manager manages the content to be protected using the DTCP-IP mechanism. The content manager supplies the content in parallel with the reading process of the content encrypting block.

The DTCP-IP content transmitter as an HTTP server, including an HTTP server section, receives a request from a sink device, and performs a process responsive to the request. The HTTP server section includes an HTTP request manager and an HTTP response manager.

The HTTP request manager includes an HTTP request receiving block and an HTTP request interpreting block. The HTTP request receiving block receives an HTTP request from the sink device as the client. The received HTTP request is then sent to the HTTP request interpreting block to be checked. If the check result of the HTTP request interpreting block is affirmative, the DTCP-IP authenticator is notified of the information of the HTTP request.

The HTTP response manager includes an HTTP response transmitting block and an HTTP response generating block. The HTTP response generating block generates an HTTP response to return an encrypted content if the check result of the HTTP request interpreting block 52B is affirmative. The HTTP response includes at least one PCP. If the check result of the HTTP request interpreting block 52B is non-affirmative, an HTTP response for returning an error is generated. The HTTP response transmitting block transmits the generated HTTP response to the client as a requesting source device. If the check result of the HTTP request interpreting block is affirmative, the HTTP response transmitting block transmits the content encrypted by the content encrypting block in the DTCP-IP authenticator in succession to an HTTP response header.

The DTCP-IP authenticator and the DTCP-IP content transmitter respectively establish a TCP/IP connection with the sink device as a client, and independently perform an authentication process and a content transfer process.

The message digest generating block in the DTCP-IP authenticator in each of the DTCP compliant sink device and the DTCP compliant source device is neither a functional module defined the DTCP-IP specification, and nor directly related to the features of this invention.

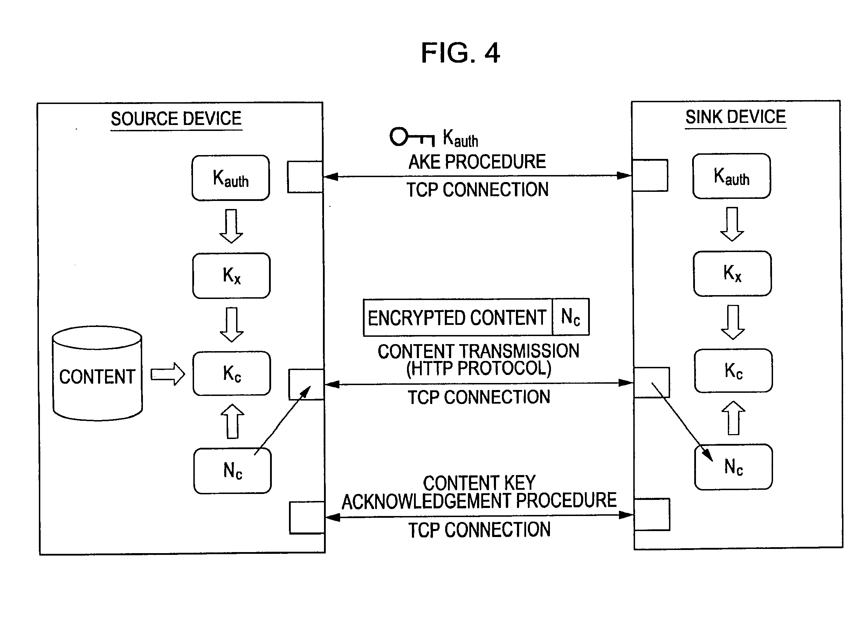

The content transfer procedure in accordance with the DTCP-IP specification is described below. Fig. 4 illustrates a mechanism for a AKE key exchange process and a content encrypting and transfer process with the key shared as a result of key exchange process, each process performed between the source device and the sink device. In accordance with the DTCP-IP specification, the content transfer protocol such as a hyper text transmission protocol (HTTP) or a real-time transport protocol (RTP) may be used. Referring to Fig. 4, HTTP is used. Two content transfer methods, a copy based transfer and a move based transfer, are available. This section is described based on the copy based content transfer method. The move based content transfer method is performed using the move function defined in the DTCP specification. The AKE process for performing the move transfer will be described later.

The source device and the sink device establish one TCP/IP connection first to authenticate each other. This authentication is hereinafter referred to as DTCP authentication or authentication and key exchange (AKE). Each standard DTCP compliant device contains a device certificate issued by the digital transmission licensing administrator (DTLA) and embedded therewithin. In the DTCP authentication process, the devices authenticate each other as a standard DTCP compliant device so that an authentication key Kₐᵤₜₕ is shared by the source device and the sink device. Upon successfully completing the AKE process, the source device generates an exchange key Kₓ serving as a seed of the content key K_{c}, encrypts the exchange key Kₓ with the authentication key Kₐᵤₜₕ, and transmits the encrypted exchange key Kₓ to the sink device.

After the authentication and key exchange process is completed, the sink device requests content from the source device. The source device may notify beforehand the sink device of a content location as an access destination of the content on the source device through content directory service (CDS) defined by the UPnP^{®}.

In the configurations of Figs. 2 and 3, the content transfer starts with the source device operating as an HTTP server and the sink device operating as an HTTP client (with the source device operating as an RTP sender and the sink device operating as a RTP receiver in the RTP). The HTTP client generates a TCP/IP connection for HTTP different from the TCP/IP connection for the AKE procedure, namely, for the DTCP authentication. In other words, the HTTP client holds socket information respectively for the AKE procedure and the content transmission. The socket information is a combination of an IP address and a port number. The sink device operating as the HTTP client requests the content from the HTTP server in the same procedure as the ordinary HTTP. The HTTP server returns the requested content as an HTTP response responsive to the request.

The source device generates a nonce N_{c} using a random number, and generates the content key K_{c} based on the exchange key Kₓ, the nonce N_{c}, and extended encryption mode indicator (E-EMI) representing an encrypt mode. The source device encrypts the content requested from the sink device with the content key K_{c}, and transmits a transmission control protocol (TCP) stream that includes a protected content packet (PCP) containing a header composed of a payload (encrypted content), the nonce N_{c}, and the E-EMI. The IP protocol divides the TCP stream into packets, each packet having a predetermined size, and attaches a header to each IP packet, and delivers the IP packet to a designated IP address.

Upon the receipt of each IP packet from the source device, the sink device constructs these IP packets into the TCP stream and extracts the transmitted PCP. When the nonce N_{c} and the E-EMI are extracted from the stream, the sink device calculates the content key K_{c} using the nonce N_{c}, E-EMI, and the exchange key Kₓ, thereby decrypting the encrypted content. Subsequent to the decrypting process, the resulting plain text content may be reproduced or recorded. When the content transfer is completed using the HTTP protocol, the sink device disconnects the TCP connection used in the content transfer as appropriate.

If the same key is repeatedly used over an extremely long TCP stream, the risk of cipher cracking increases. For this reason, DTCP-IP requires that the source device should update the nonce N_{c}, i.e., the content key K_{c} every 128 MB (increments the nonce N_{c} by one). When the confirmation of the content key is required, the sink device further establishes a TCP connection for content key confirmation separate from the TCP connection for the content transfer, thereby performing a content key confirmation process with the source device. DTCP-IP Volume 1 Supplement E.8.6 standardizes a "content key confirmation" step in a content key confirmation procedure.

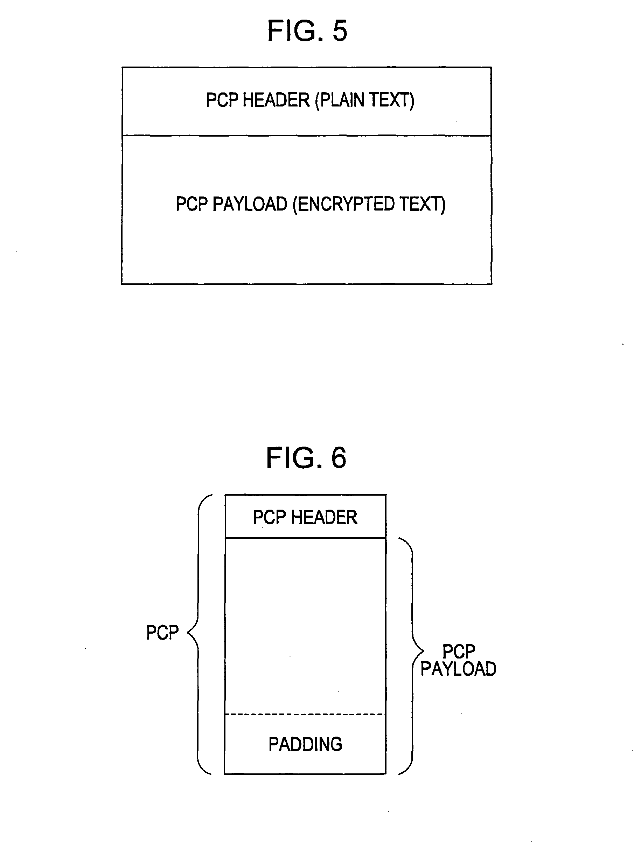

In accordance with the DTCP-IP specification, the PCP includes a header containing the nonce N_{c}, and the payload composed of the encrypted packet. Fig. 5 diagrammatically illustrates a data structure of the packet PCP. The PCP header includes a plain text containing the nonce N_{c}. The PCP payload includes the content encrypted with the content key K_{c} determined by the nonce N_{c} (no encrypting is required if "copy-free" is specified as copy control information). The PCP payload is subjected to a padding process as necessary prior to the encryption to be always as long as an multiple of 16 bytes. To assure content security, the nonce N_{c}, namely, the content key K_{c} is periodically updated as previously discussed, and the PCP is also subjected to the padding process (a plurality of PCPs can be subjected to the padding process without updating the content key K_{c}). If a value of a protected_content_legth is not an multiple of 16 bytes, a pad of 1 through 15 bytes may be added to the PCP payload. With the nonce N_{c} updated, the content key confirmation is initiated. The HTTP response includes at least one PCP, and an RTP payload is composed of one PCP. Fig. 6 illustrates a padded PCP.

The move function is available in the DTCP-IP specification as means for allowing the sink device to use the content in the no more copies state. The sink device is permitted to receive the content from the source device on condition that the sink device handle the received content in the no more copies state and that the source device delete the original content or inhibit the use of the original content. No problem is presented because the number of entities of contents transmitted from the source device to the sink device does not increased through the move function.

However, if the content move transfer process is interrupted between the source device and the sink device due to a failure, the content may be fragmented to each of the source device and the sink device. If the move process has not been completed successfully, an undo step (to undo the performed move process) or a resume step (to resume the remaining portion of the move process) is contemplated. But there are cases in which such a process cannot be performed.

One embodiment of the present invention includes a mechanism that allows the sink device to use incrementally received data portions of the content when the content is moved from the source device to the sink device. Upon receiving one data portion of the content, the sink device is assigned the right to the received data from the source device without completing the transfer process of the entire content. The source device invalidates the corresponding data portion of the content. The stepwise content movement is thus performed in a manner such that each time a data portion of the content is transferred, the moved content increases incrementally.

The mechanism in which the received data is incrementally set to be usable at the sink device in the data move transfer is referred to an "incremental move." Even if the move transfer is interrupted for any failure, the incremental move allows the data increment already received by the sink device to be handled in a manner fair to both the content copyright holder and the user.

In the incremental move, the data at the sink device may be set to be usable immediately subsequent to the reception thereof. In exchange for the reception of the data at the sink device, the source device sets the corresponding data portion unusable (i.e., invalidates the corresponding data portion). If the right to the data is transferred immediately subsequent to the reception of the data, the source device cannot determine whether the data moved therefrom is correctly received and stored at the sink device. For this reason, the sink device may set the received data usable (i.e., validates the received data) subsequent to a commitment process of the received data with the source device. As part of the commitment process, the source device sets unusable the data portion, the reception of which the sink device has reported to the source device. The embodiments of the incremental move are described in a variety of cases as below.

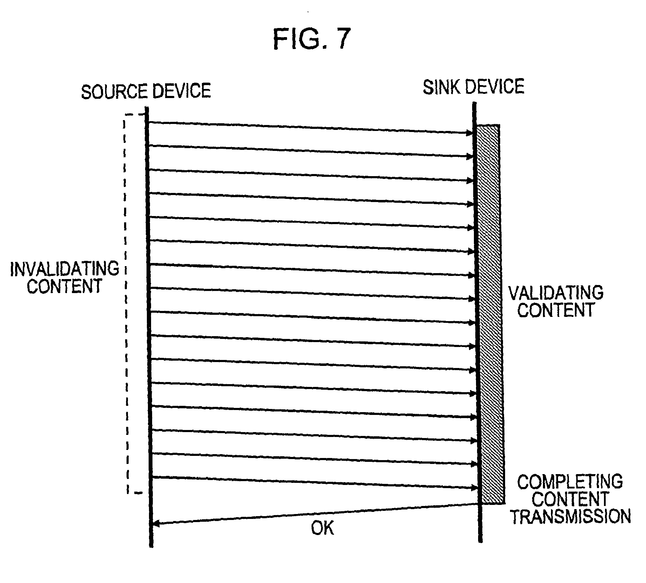

Figs. 7 through 10 illustrate content transfer sequences in which the moved data is set to be usable at the sink device immediately subsequent to the reception thereof.

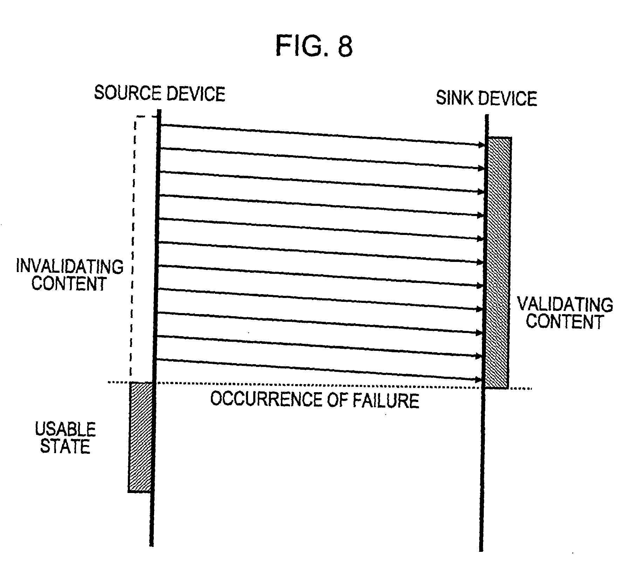

As shown in Fig. 7, the right to the content can be transferred from the source device to the sink device if the transfer of the entire content has been successfully completed. If any failure occurs in the middle of transfer of the content as shown in Fig. 8, a transmitted data portion of the content stays at the sink device while an untransmitted data portion of the content remains at the source device. The content is thus fragmented. Such a state is caused if the move process cannot be resumed subsequent to an interruption. Since the right to the data increment that has been safely received is transferred to the sink device, the sink device can use the data increment. The source device invalidates the already transmitted data portion of the content, but reserves the right to the remaining untransmitted data portion of the content, and can still use the untransmitted data portion.

If the already received data can be inhibited in use from any time point thereof, the move process can be canceled at that time point thereafter. To cancel the move of the data, a "cancel" command is available in the present embodiment.

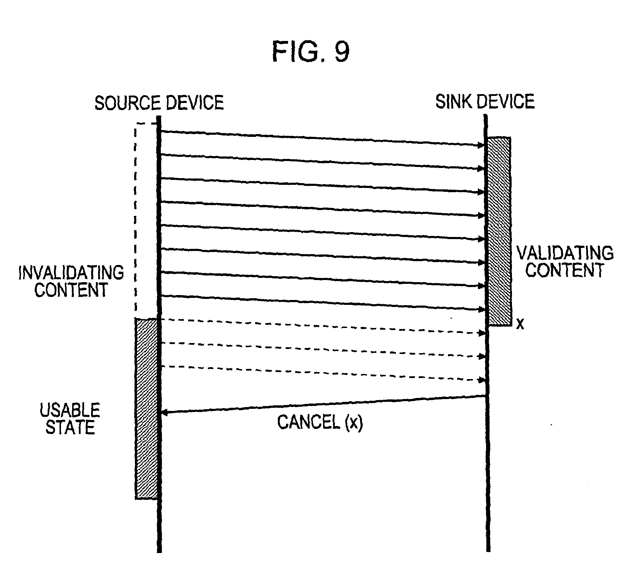

Fig. 9 diagrammatically illustrates the content transfer sequence to cancel the move of the data at time point x thereafter. The received data prior to time point x may include a data portion that has already been recorded in a usable state and cannot be invalidated (i.e., cannot be undone), or a data unit convenient for use at the sink device (for example, a size of a receiving buffer). The sink device transfers to the source device the cancel command containing as an argument the time point x at which the move transfer is to be canceled.

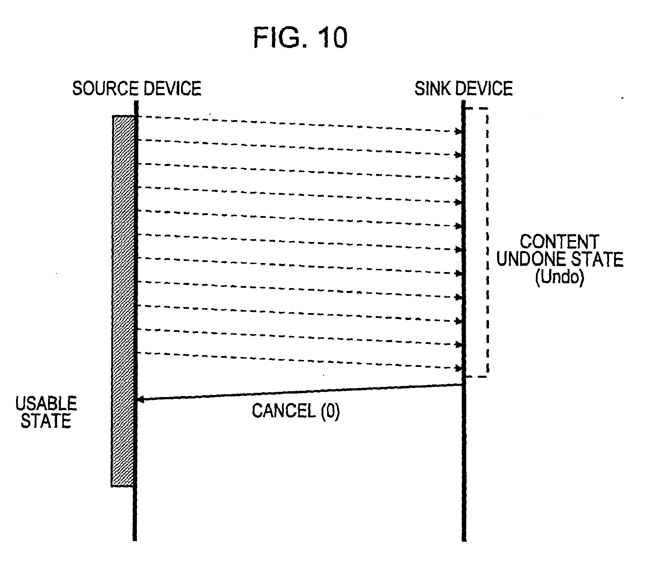

If the sink device can set the entire received data to be an unusable state and intends to cancel entirely the move transfer, the cancel command containing an initial value zero as a cancel time may be transmitted to the source device as shown in Fig. 10. The entire move transfer operation can thus be undone.

The cancel command needs to be transmitted in a safe transaction. Using a TCP connection for command transmission or authentication and key exchange, a transaction for the cancel command and a transaction related to the cancel command are performed. The frame format of the cancel command will be described later.

To move content from the source device to the sink device, one of a download move transfer and an upload move transfer is performed. In the download move transfer, the sink device operating as a client downloads the content from the source device operating as a content server. In the upload move transfer, the source device operating as a client uploads the content to the sink device operating as a content server. An operational sequence of an immediate incremental move performed in each of an download fashion and an upload fashion between the source device and the sink device is described below.

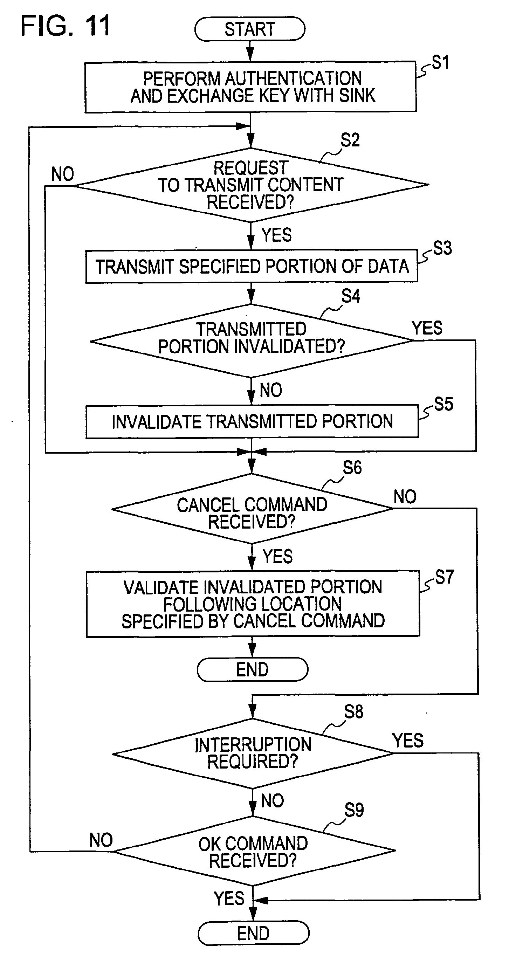

Fig. 11 is a flowchart illustrating an operational sequence of the source device that downloads the content to the sink device in an immediate incremental move transfer process.

The source device establishes a TCP connection for authentication and key exchange (AKE) with the sink device operating as a content transmission destination, thereby performing an AKE process (step S1). The partners to which the source device transfers a key are limited to a single sink.

If the AKE process has been successfully completed, a TCP connection for content transfer is established with the sink device. Upon receiving a content transmission request from the sink device (yes in step S2), the source device transmits a specified portion of content data (step S3). If the transmitted portion of content data is still not invalidated (no in step S4), the source device invalidates the transmitted portion of the content data (step S5).

The word invalidate does not mean a process of deleting or modifying data but a process of restricting the use of the data for purposes other than retransmission. When the sink device cancels the move transfer, the invalidated data is restored to be in a usable state. The cancel command contains information of a pointer specifying a range of the content to be invalidated. The source device manages the data, for example, restricts the use of the data of the range prior to a position indicated by the pointer.

Upon receiving the cancel command from the sink device (yes in step S6), the source device validates a portion of the data following the position specified by the cancel command (time point x in Fig. 9) in step S7, and completes the routine.

If the source device has received no cancel command from the sink device (no in step S6), the source device determines whether to interrupt the move process (step S8). The interruption of the move process is required when a user or an application requests the interruption, or when time is out.

If the interruption of the move process is required (yes in step S8), the routine is terminated. If the interruption of the move process is not necessary (no in step S8), the routine is terminated in response to the reception of an OK command from the sink device (yes in step S9).

If the OK command has not been received (no in step S9), processing returns to step S2 to wait on standby for a transmission request for a next content from the sink device.

The source device retransmits invalidated data on condition that the sink device does not use the retransmitted portion of data for copying purposes. The source device may verify at authentication that the sink device complies with the requirement and may deny the retransmission if the compliance is not verified.

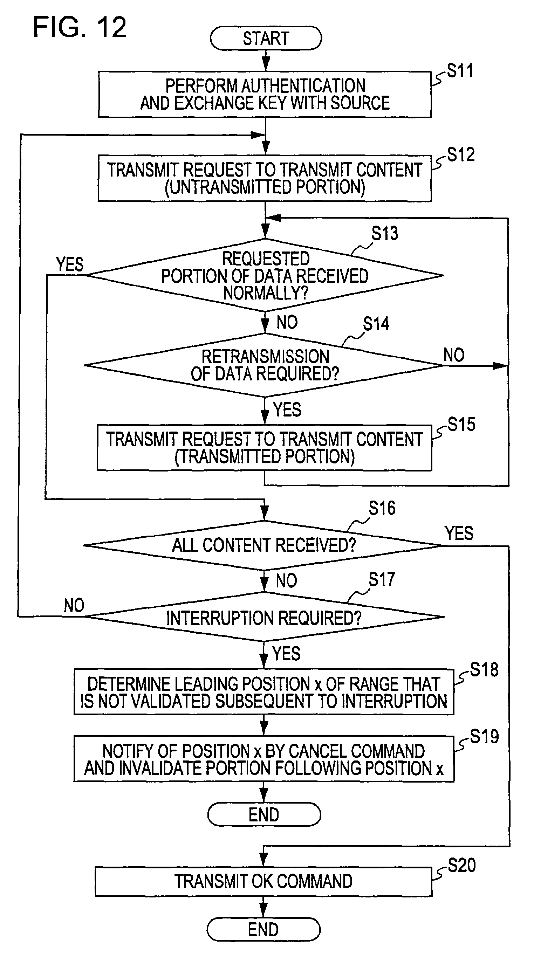

Fig. 12 is a flowchart illustrating an operational sequence of the sink device that downloads the content from the source device in an immediate incremental move transfer.

The sink device establishes a TCP connection for authentication and key exchange (AKE) process with the source device operating as a content transmission source device, and performs the AKE process (step S11).

When the AKE process has been successfully completed, the sink device establishes a TCP connection for content transfer with the source device. The sink device transmits a data transmission request to transmit untransmitted portion of content data (step S12).

If the requested portion of the content data has not been normally received (no in step S13), the sink device determines whether the retransmission of the data is required (step S14). The data is transmitted when time is out, or when the received data is abnormal or incomplete.

If the data retransmission is not required (no in step S14), processing returns to step S13 to wait on standby until the data is normally received. If the data retransmission is required (yes in step S14), the sink device returns to step S13 after transmitting to the source device a request to retransmit the already transmitted data (step S15), and then waits on standby until the data is normally received. The source device retransmits the invalidated portion of the data on condition that the sink device does not use the retransmitted portion for copying purposes.

When the requested portion of the data has been normally received (yes in step S13), the sink device determines whether all data of the content has been received (step S16). If an untransmitted portion of the data remains, the sink device determines whether to interrupt the move process of the content (step S17). The move process needs to be interrupted when the user or an application requests an interruption or when time is out.

To continue the move process (no in step S17), the sink device returns to step S12 to repeat the reception process of the untransmitted data.

To interrupt the move process (yes in step S17), the sink device determines a leading position x of a data range that is not validated subsequent to the interruption, notifies the source device of the leading position x using the cancel command (step S18), invalidates the portion of the received content after the leading position x (step S19), and completes the routine. The meaning of the word invalidate has been previously discussed.

Upon receiving all data forming the content (yes in step S16), the sink device transmits an OK command to the source device (step S20) and then completes the routine.

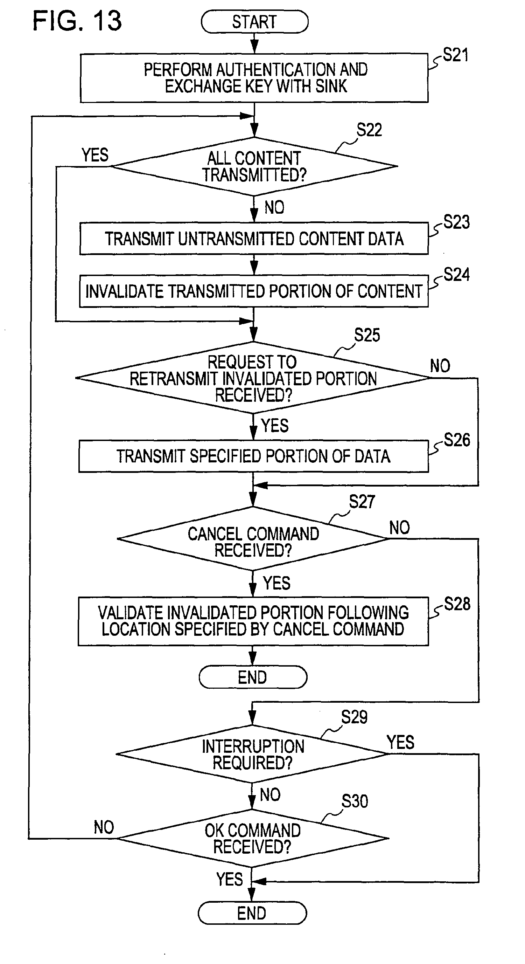

Fig. 13 is a flowchart illustrating a process of the source device that uploads the content to the sink device in the immediate incremental move transfer.

The source device establishes a TCP connection for authentication and key exchange process with the sink device operating as a content transmission destination, and performs the AKE process (step S21). The partners to which the source device transfers first a key are limited to a single sink. If the AKE process has been successfully completed, the source device establishes a TCP connection for content transfer with the sink device.

The source device determines whether all content to be uploaded are transmitted (step S22).

If an untransmitted portion of the content remains (no in step S22), the source device transmits that portion of the content (step S23). The transmitted portion of the content data is invalidated (step S24).

After invalidating the transmitted data of the content and transmitting all content to be transmitted (yes in step S22), the source device determines whether a retransmission request to retransmit the invalidated data has been received (step S25) .

If the data retransmission request has been received (yes in step S25), the source device retransmits the specified portion of the data (step S26). The data retransmission is performed on condition that the sink device does not use the retransmitted portion for copying purposes. The source device verifies at authentication whether the sink device complies with this condition, and denies the retransmission request if the source device fails to verify the sink device's compliance.

If the data retransmission request has not been received (no in step S25), or subsequent to the data retransmission performed in response to the request in step S26, the source device determines whether a cancel command has been received from the sink device (step S27).

If the cancel command has been received (yes in step S27), the source device validates the invalidated data portion following the position specified in the cancel command (time point x of Fig. 9) (step S28), and completes the routine.

If the cancel command has not been received from the sink device (no in step S27), the source device determines whether to interrupt the move process (step S29). If yes in step S29, the routine ends. The move process is interrupted when the user or an application requests an interruption, or when time is out. If no interruption is required, the source device receives an OK command (yes in step S30), and completes the routine after a commitment process.

If the OK command has not been received (no in step S30), processing returns to step S22 to wait on standby for a request to transmit a next content from the sink device.

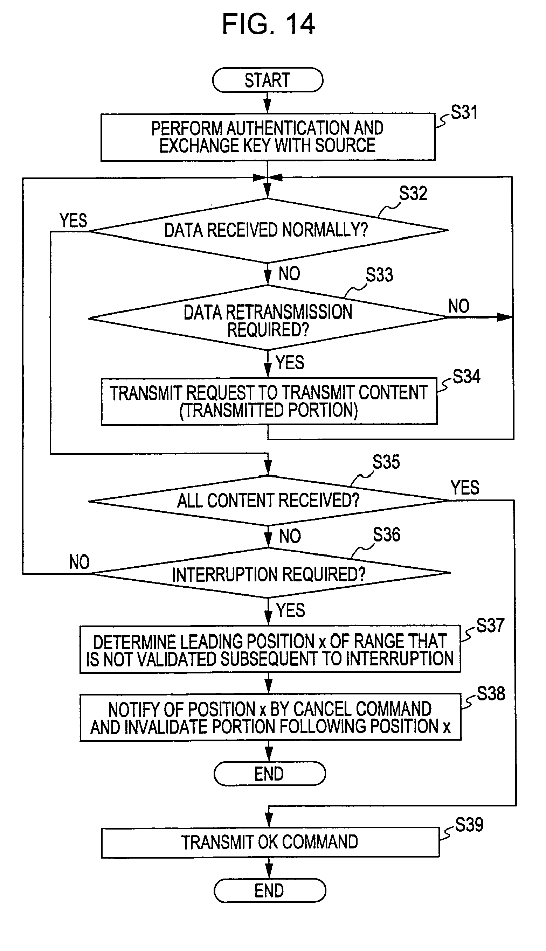

Fig. 14 is a flowchart illustrating a process of the sink device that uploads the content from the source device in the immediate incremental move transfer.

The sink device establishes a TCP connection for authentication and key exchange (AKE) with the source device operating as a content transmission source device, and performs the AKE process (step S31). If the AKE process has been successfully completed, the sink device establishes a TCP connection for content transfer with the source device.

The sink device determines whether the data has been normally received from the source device (step S32).

If the data has not normally been received (no in step S32), the sink device determines whether the data retransmission is needed (step S33). The data needs to be retransmitted when time is out, or when the received data is abnormal or incomplete.

If the data retransmission is not needed (no in step S33), the sink device returns to step S32 to wait on standby until the data is normally received. If the data retransmission is needed (yes in step S33), the sink device returns to step S32 after transmitting a request to retransmit the previously transmitted data (step S34), and waits on standby until the data is normally received. When the source device retransmits the invalidated data, the sink device does not use the data for other purposes than for compensation for the abnormally received data portion.

If the sink device has normally received the data of the content from the source device (yes in step S32), the sink device determines whether all data of the content has been received (step S35). If an untransmitted portion of the data remains, the sink device determines whether to interrupt the move process (step S36). The move process needs to be interrupted when the user or an application requests an interruption, or when time is out.

To continue the move process (no in step S36), the sink device returns to step S32 to repeat the reception process of the untransmitted data.

To interrupt the move process (yes in step S36), the sink device determines the leading position x of the data range that is not validated after the interruption, notifies the source device of the leading position x using the cancel command (step S37), invalidates the content following the leading position x (step S38), and completes the routine. The meaning of the word invalidate has been previously discussed.

When all data forming the content has been received (yes in step S35), the sink device transmits an OK command to the source device (step S39), and completes the routine.

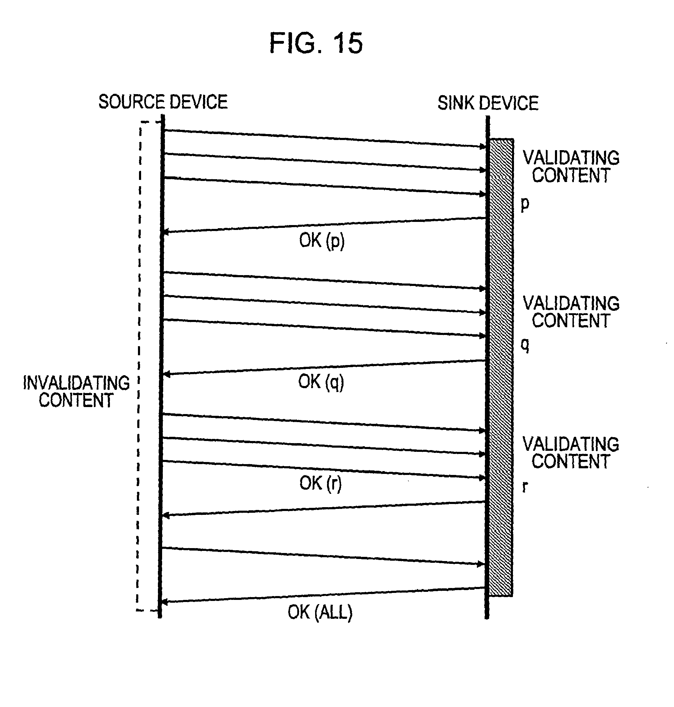

Figs. 15 through 17 diagrammatically illustrate content sequences in which the received data is made usable at the sink device subsequent to a commitment process with the source device relating to the received data.

The data moved to the sink device remains unusable until the commitment process with the source device relating to the data is completed. The source device makes unusable a portion of the content specified by the sink device in the commitment process. To perform the commitment process, an "OK" command is defined in the present embodiment. The sink device writes in the OK command a data portion desired to be usable (i.e., a target data portion of the commitment process), and then transmits the OK command.

Fig. 15 illustrates the operational sequence in which the transfer of the entire content has been successfully completed. To use data received until time point p, the sink device transmits to the source device the OK command containing the time point p as an argument and performs the commitment process. In exchange for making unusable (i.e., invalidating) the data extending until the time point p at the source device, the sink device makes usable (i.e., validates) the data extending until the time point p.

The sink device transmits the OK command at each of time points q and r while receiving data from the source device. The sink device thus performs the commitment process, thereby making usable the data at each time point.

The time point at which the sink device performs the commitment process may be arranged at a data unit convenient for use in the sink device (such as a receiving buffer size). As shown in Fig. 15, the entire content is moved through several commitment processes.

A commitment process may be performed for a new data increment newly moved in the middle of a content transfer so that received data is successively used at each time point. The commitment process for the data increment may be referred to as an intermediate commitment process. Alternatively, instead of performing the intermediate commitment process, the sink device performs the commitment process at a time for the entire content by transmitting the OK command at the moment the entire content has been transmitted. The procedure is referred to as a block move. The block move is described in Japanese Unexamined Patent Application Publication No. 2006-4129 assigned to the same assignee of this invention.

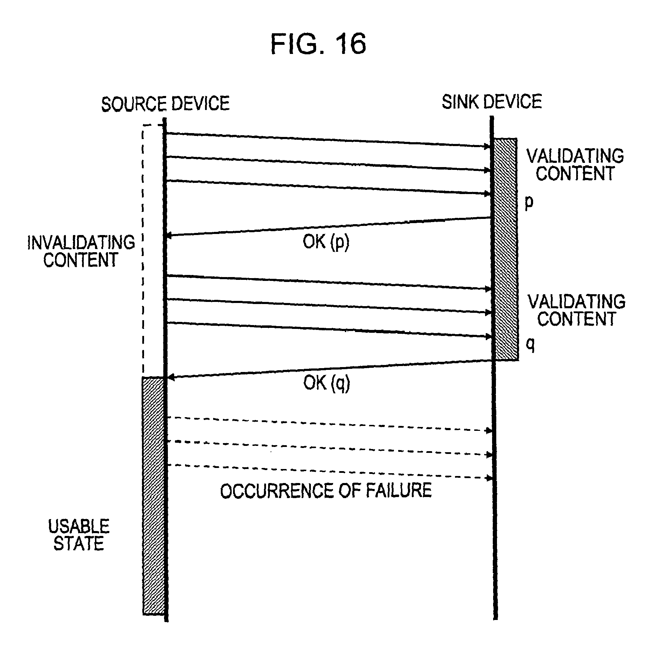

Fig. 16 illustrates an operational sequence in which a failure occurs in the middle of the intermediate commitment process for content transfer. To use the data extending until the time point p, the sink device performs the commitment process by transmitting the OK command containing as an argument the time point p to the source device. In exchange for making unusable the data extending to the time point p at the source device, the sink device makes usable the data extending to the time point p. Similarly, the sink device makes usable the data to time point q by performing the commitment process at the moment the data has received at the time point q.

If a failure occurs in the content transfer and the move process cannot be resumed thereafter, a transmitted data portion of the content stays at the sink device while an untransmitted portion of the data remains at the source device. The content is thus fragmented. In the immediate incremental move, the content is definitely fragmented (see Figs. 8 and 9) if the move process cannot be resumed after the interruption. In the commitment incremental move, the content is fragmented only if the move process cannot be resumed after the interruption subsequent to an intermediate commitment process.

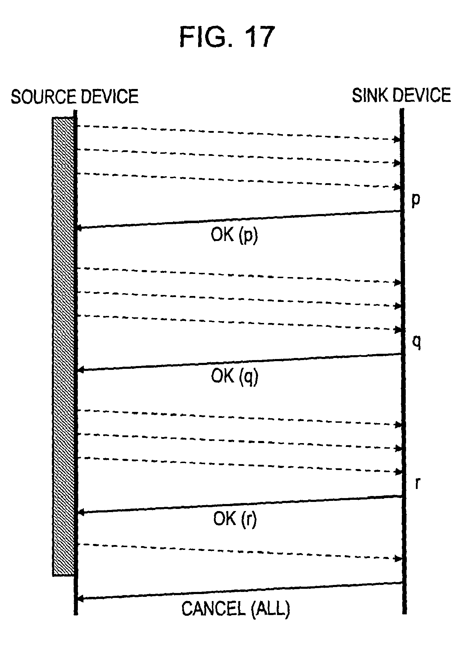

As shown in Fig. 15, a plurality of intermediate commitment processes are performed. The move process can be canceled even after the commitment process if the sink device makes unusable the received data once set to be usable. As shown in Fig. 17, the sink device transmits to the source device the cancel command describing that all the received data has been made unusable, after performing the intermediate commitment process at each of time points P and q. In this case, the transmitted content becomes usable at the source device and the move process is undone.

The OK command must be transmitted in a safe transaction. For example, using the TCP connection for command transfer or AKE, a transaction for the OK command and a transaction related to the OK command are performed. The frame format of the OK command will be described later.

In the immediate incremental move, data can be missing due to a connection error in the middle of data transaction. When power to each device is switched off during the transfer transaction, buffered data can be missing. In contrast, in the commitment incremental move, a connection error does not cause the data to be missing because the data is invalidated at the source device only after the commitment process. Even when power to the device is switched off during the transfer transaction, the missing data can be restored by storing the data prior to the commitment process on a non-volatile memory area.

The immediate increment move requires that a move undo process be performed in a safe transaction. In the commitment incremental move, a move undo process need to be performed in a safe transaction only after an intermediate commitment process is performed.

To move content from the source device to the sink device, one of a download move transfer and an upload move transfer is performed. In the download move transfer, the sink device operating as a client downloads the content from the source device operating as a content server. In the upload move transfer, the source device operating as a client uploads the content to the sink device operating as a content server. An operational sequence of the commitment incremental move performed in each of an download fashion and an upload fashion between the source device and the sink device is described below.

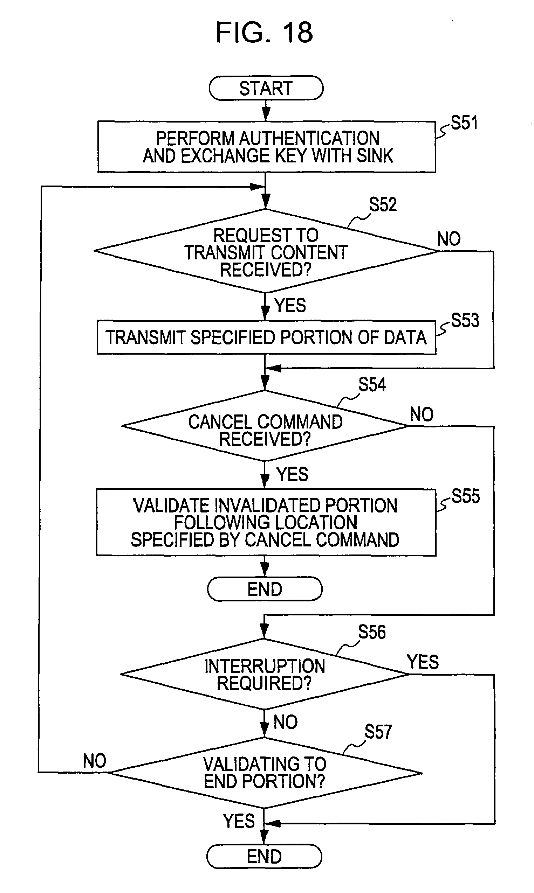

Fig. 18 is a flowchart illustrating a process of the source device that downloads the content to the sink device in a commitment incremental move.

The source device establishes a TCP connection for authentication and key exchange (AKE) with the sink device operating as a content transmission destination, thereby performing an AKE process (step S51). The partners to which the source device transfers a key are limited to a single sink.

If the AKE process has been successfully completed, a TCP connection for content transfer is established with the sink device. Upon receiving a content transmission request from the sink device (yes in step S52), the source device transmits a specified portion of content data (step S53). The source device invalidates the transmitted data in parallel with the data transmission process. The data invalidation process will be described in detail later.

Upon receiving the cancel command from the sink device (yes in step S54), the source device validates a portion of the invalidated data following the position specified by the cancel command (step S55), and completes the routine.

If the source device has received no cancel command from the sink device (no in step S54), the source device determines whether to interrupt the move process (step S56). The interruption of the move process is required when a user or an application requests an interruption, or when time is out.

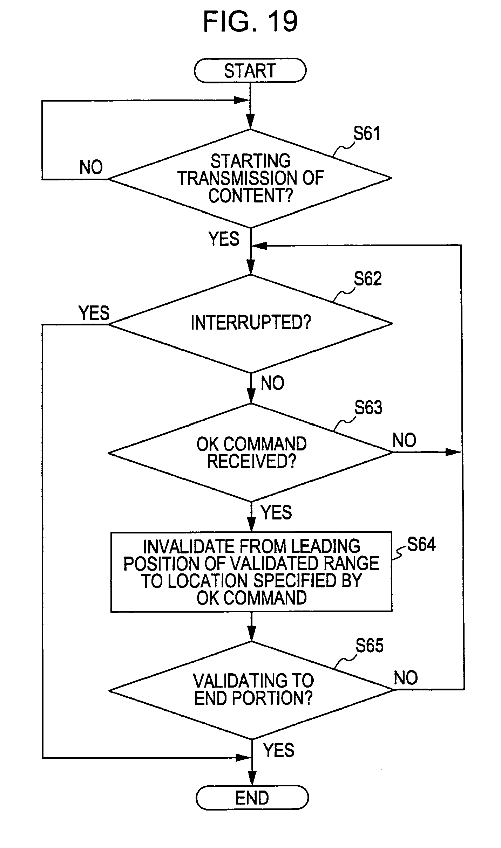

If the interruption of the move process is required (yes in step S56), the routine is terminated. If the interruption of the move process is not necessary (no in step S56), the source device determines whether the data transmitted to the sink device has been invalidated to the end portion thereof in accordance with the process of Fig. 19 (to be discussed later) (step S57). If the data is invalidated to the end portion thereof, the routine is terminated. If the data is not invalidated to the end portion thereof, processing returns to step S52 to wait on standby for a next transmission request from the sink device.

The source device invalidates the transmitted data based on a notification from the sink device (in the commitment process using the OK command) in parallel with the content download move to the sink device in accordance with the process of Fig. 18. The word invalidate does not mean a process of deleting or modifying data but a process of restricting the use of the data for purposes other than retransmission. The source device retransmits once invalidated portion of the content on condition that the sink device does not use the retransmitted portion for copying purposes. The source device may verify at authentication that the sink device complies with this requirement and may deny the retransmission if the sink device's compliance is not verified.

Fig. 19 is a flowchart illustrating a data invalidation process that the source device that performs in parallel with the commitment incremental move.

If the source device receives an OK command (yes in step S63) within a period from the start of content transmission to the sink device (yes in step S61) to an interruption of the content transmission (no in step S62), the source device invalidates the transmitted data from the leading position of an effective range to the position x specified by the OK command (step S64).

When the transmitted content is invalidated to the end portion thereof (yes in step S65), the routine is terminated. If the transmitted content is not invalidated to the end portion thereof (no in step S65), processing returns to step S62 to wait on standby for the occurrence of an interruption or the reception of a next OK command.

If the move process is interrupted (yes in step S62), the routine is terminated.

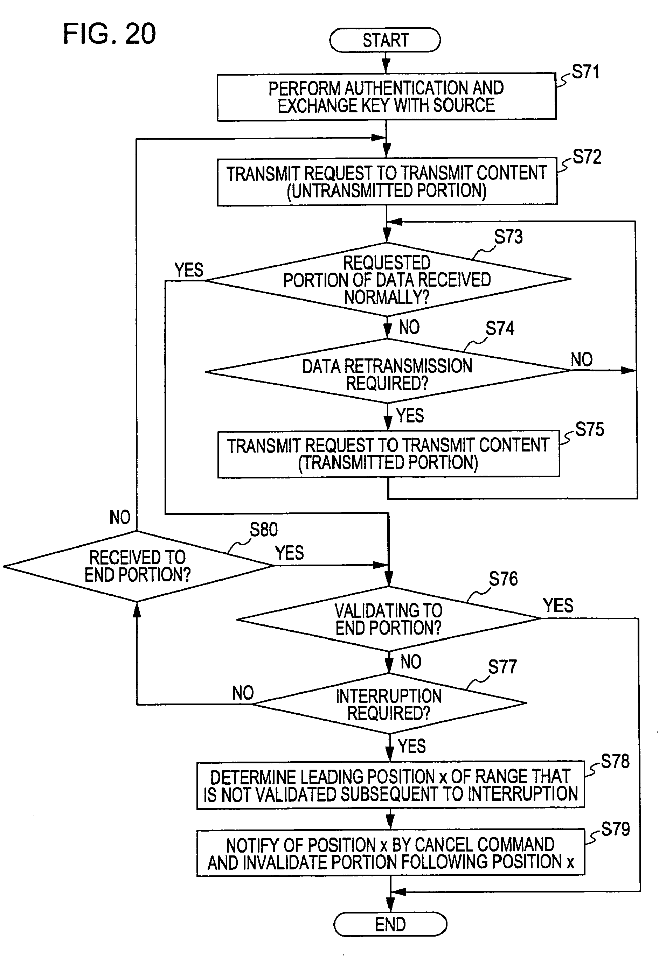

Fig. 20 is a flowchart illustrating a process of the sink device that downloads the content from the source device in the commitment incremental move.

The sink device establishes a TCP connection for authentication and key exchange (AKE) process with the source device operating as a content transmission source device, and performs the AKE process (step S71).

When the AKE process has been successfully completed, the sink device establishes a TCP connection for content transfer with the source device. The sink device transmits a data transmission request to transmit untransmitted portion of content data (step S72). The sink device determines whether the requested portion has normally been received from the source device (step S73). The sink device performs a data invalidation process in parallel with a data reception process from the source device. The data invalidation process will be described in detail later.

If the requested portion of the content data has not been normally received (no in step S73), the sink device determines whether the retransmission of the data is required (step S74). The data retransmission is required when time is out, or when the received data is abnormal or incomplete.

If the data retransmission is not required (no in step S74), processing returns to step S73 to wait on standby until the data is normally received. If the data retransmission is required (yes in step S74), the sink device returns to step S73 after transmitting to the source device a request to retransmit the already transmitted data (step S75), and then waits on standby until the data is normally received. The source device retransmits the once invalidated portion of the data on condition that the sink device does not use the retransmitted portion for copying purposes.

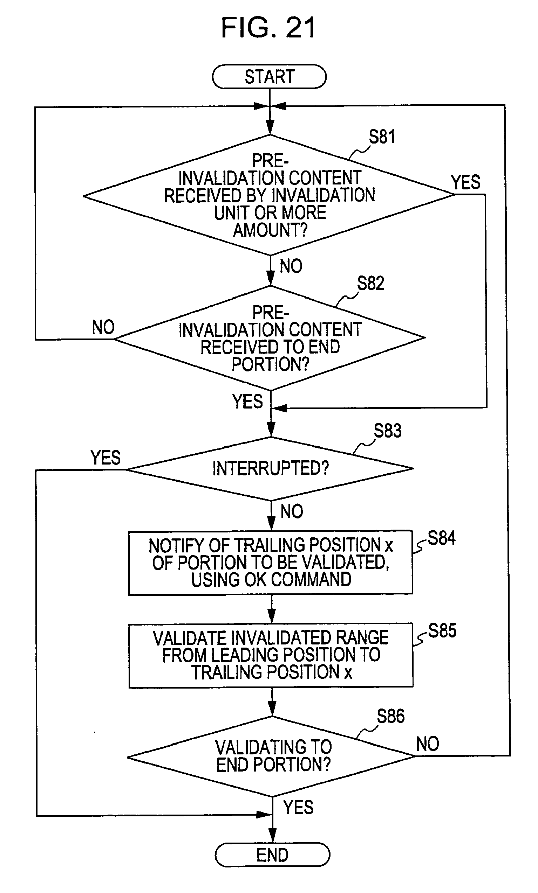

When the requested portion of the data has been normally received (yes in step S73), the sink device determines whether the received data is validated to the end portion thereof in accordance with a process of Fig. 21 (to be discussed later) (step S76). If the data is validated to the end portion thereof, the routine is terminated.

If an invalid portion remains in the received data (no in step S76), the sink device determines whether the move process of the content needs to be interrupted (step S77). The interruption of the move process is needed when the user or an application requests the interruption or when time is out.

To continue the move process (no in step S77), the sink device determines whether the content requested to transmit in step S72 has been received to the end portion thereof (step S80). If the content has not been received to the end portion thereof, processing returns to step S12 to repeat the reception process of the untransmitted data. If the content has been received to the end portion thereof, processing returns to step S76 to determine whether the received data is validated to the end portion thereof.

To interrupt the move process (yes in step S77), the sink device determines a leading position x of a data range that is not validated subsequent to the interruption, notifies the source device of the leading position x using the cancel command (step S78), invalidates the portion of the received content after the leading position x (step S79), and completes the routine.

The sink device validates the received data based on a notification to the source device (in the commitment process using the OK command) in parallel with the content download move process the sink device performs in accordance with the process of Fig. 20. The word validate means that the data is shifted from an unusable state to a usable state.

Fig. 21 is a flowchart illustrating a data validation process of the sink device in the commitment incremental move.

The sink device checks whether the pre-validation content data has been received by a predetermined validation unit (i.e., the content is stored on a received data buffer) (step S81). If the pre-validation content data is not received by a predetermined validation unit (no in step S81), the sink device waits on standby for the data reception from the source device until the pre-validation content is received (step S82).

When the pre-validation content data is received by a predetermined validation unit (yes in step S81), the sink device determines whether the move process has been interrupted (step S83). If the move AKE procedure is interrupted, the routine is terminated.

If the move AKE procedure is not interrupted (no in step S83), the sink device notifies the source device of a trailing position x of the portion to be validated (step S84), and validates the content from the leading position to the trailing position x of the invalid range (step S85).

If the content is validated to the end portion thereof (yes in step S86), the routine is terminated. If the content is not validated to the end portion thereof (no in step S86), processing returns to step S81.

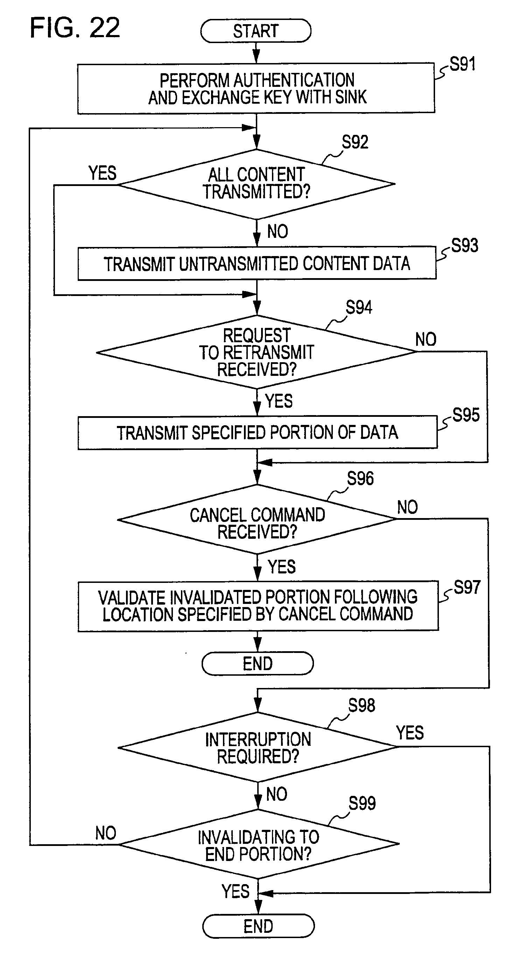

Fig. 22 is a flowchart illustrating a process of the source device that uploads the content to the sink device in the commitment incremental move.

The source device establishes a TCP connection for authentication and key exchange process with the sink device operating as a content transmission destination, and performs the AKE process (step S91). The partners to which the source device transfers first a key are limited to a single sink. If the AKE process has been successfully completed, the source device establishes a TCP connection for content transfer with the sink device.

The source device determines whether all content to be uploaded are transmitted (step S92). If an untransmitted portion of the content remains, the source device transmits that portion of the content (step S93). In parallel with the data transmission process, the source device performs the data invalidation process in response to the reception of an OK command from the sink device. The data invalidation process is performed in accordance with the process of Fig. 19.

The source device determines whether a retransmission request to retransmit the invalidated data has been received (step S94). If the data retransmission request has been received, the source device retransmits the specified portion of the data (step S95). The data retransmission is performed on condition that the sink device does not use the retransmitted portion for copying purposes. The source device verifies at authentication whether the sink device complies with this condition, and denies the retransmission request if the source device fails to verify the sink device's compliance.

If the data retransmission request has not been received (no in step S94), or subsequent to the data retransmission performed in response to the request in step S95, the source device determines whether a cancel command has been received from the sink device (step S96).

If the cancel command has been received (yes in step S96), the source device validates the invalidated data portion following the position specified in the cancel command (step S97), and completes the routine.

If the cancel command has not been received from the sink device (no in step S96), the source device determines whether to interrupt the move process (step S98). If yes in step S98, the routine ends. The move process is interrupted when the user or an application requests an interruption, or when time is out. If the move process interruption is required, the routine is terminated.

If the move process does not need to be interrupted (no in step S98), the source device determines whether the data already transmitted to the sink device has been invalidated to the end portion thereof in accordance with the process of Fig. 19 (step S99). If the transmitted data is invalidated to the end portion thereof, the routine ends. If the transmitted data is not invalidated to the end portion thereof, processing returns to step S92.

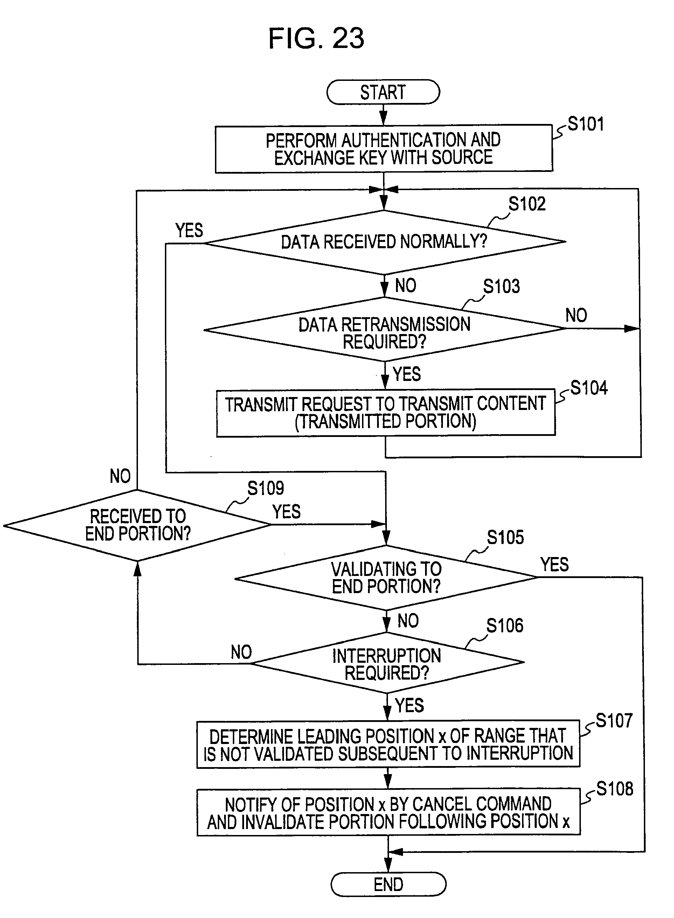

Fig. 23 is a flowchart illustrating a process of the sink device that uploads the content from the source device in the commitment incremental move transfer.

The sink device establishes a TCP connection for authentication and key exchange (AKE) with the source device operating as a content transmission source device, and performs the AKE process (step S101). If the AKE process has been successfully completed, the sink device establishes a TCP connection for content transfer with the source device.

The sink device determines whether the data has been normally received from the source device (step S102). In parallel with the data reception process with the source device, the sink device performs a validation process on the received data. The data validation process has previously discussed with reference to Fig. 21.

If the data has not normally been received (no in step S102), the sink device determines whether the data retransmission is needed (step S103). The data needs to be retransmitted when time is out, or when the received data is abnormal or incomplete.

If the data retransmission is not needed (no in step S103), the sink device returns to step S102 to wait on standby until the data is normally received. If the data retransmission is needed (yes in step S103), the sink device returns to step S102 after transmitting a request to retransmit the previously transmitted data (step S104), and waits on standby until the data is normally received. When the source device retransmits the invalidated data, the sink device does not use the data for other purposes than for compensation for the abnormally received data portion.

If the sink device has normally received the data of the content from the source device (yes in step S102), the sink device determines whether the received data has been validated to the end portion thereof in accordance with the process of Fig. 21 (step S105). If the received data has been validated to the end portion thereof, the routine ends.

If an invalid portion of the data remains (no in step S105), the sink device determines whether to interrupt the move process (step S106). The move process needs to be interrupted when the user or an application requests an interruption, or when time is out.

To continue the move process (no in step S106), the sink device determines whether the content requested to transmit in step S72 has been received to the end portion thereof (step S109). If the requested content has not been received to the end portion thereof, processing returns to step S102 to repeat the process of receiving the untransmitted data. If the requested content has been received to the end portion thereof, processing returns to step S105 to determine whether the received data is validated to the end portion thereof.

To interrupt the move process (yes in step S106), the sink device determines the leading position x of the data range that is not validated after the interruption, notifies the source device of the leading position x using the cancel command (step S107), invalidates the content following the leading position x (step S108), and completes the routine.

In the content transfer system of the present embodiment of the present invention, the content once moved from the source device to the sink device is canceled in any range using the cancel command.

The canceling operation is based on a mechanism that allows the data received by the sink device to be made unusable from any or particular time point thereafter.

The functional configuration of the sink device has previously been discussed with reference to Fig. 2. The AKE block in the DTCP-IP authenticator exchanges exchange key Kₓ with the source device. The content decrypting block calculates the content key K_{c} from the exchange key Kₓ and the DTCP-IP authenticator decrypts the encrypted content received from the source device using the content key K_{c}.

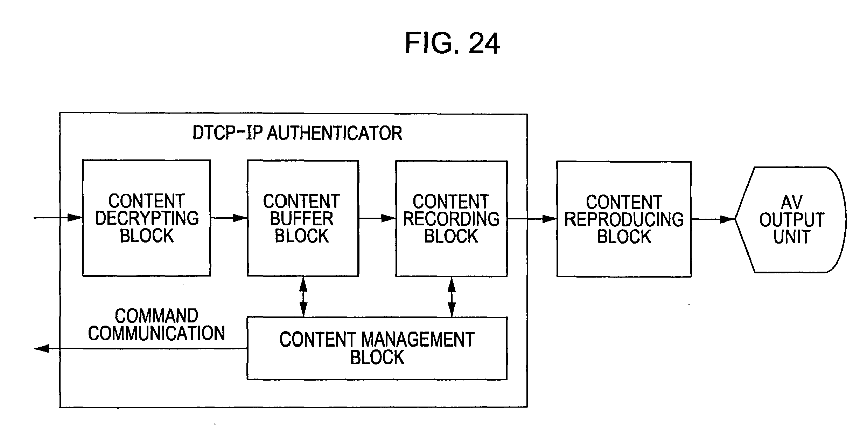

Fig. 24 illustrates a functional configuration of a DTCP-IP authenticator for invalidating, namely, making unusable, once validated data. The DTCP-IP authenticator includes a content buffer block for temporarily storing the content data decrypted by a content decrypting block, and a content recording block for recording the buffered content data. A content management block manages the content data stored on the content buffer block and the content recording block in accordance with commands issued to the source device such as the cancel command and the OK command.

The content may be recorded on a recording medium such as a hard disk in a rewritable manner or a recording medium in a one-time recording manner permitting no rewriting. If the content recording block storing the content is a rewritable type, a pre-validation content may be first stored and then validated later. If the content recording block storing the content does not permit rewriting, content data must be first validated and then recorded later. By arranging the content recording block, like the content decrypting block, in the DTCP-IP authenticator, leakage problem of the decrypted content between the content decrypting block and the content recording block is controlled.

A content reproducing block, if used as a real-time monitor of the content, reads pre-validation data from the content recording block, and renders the data into a video signal and an audio signal to output video and sound from an audio-visual (AV) output unit such as a display. In such a reproducing method of the decrypted content, the data disappears immediately instead of being copied as the data is output. This operation does not violate the DTCP rule that the same content should not be present at both the source device and the sink device in duplication.

To cancel the content data moved to the sink device in the incremental move transfer, the data on the content buffer block and the data written on the content recording block should be invalidated. If the data on the content buffer block is destroyed even with the data written on the content recording block remaining validated, the destroyed portion can still be cancelled.

Cases requiring data retransmission are described below. Content decrypted by the content decrypting block may be composed of a plurality of data blocks, and each block may contain a sequence counter. If the sequence counter of the received data block is not continuous, the content buffer block detects that data at the corresponding location is missing. Before transmitting to the content recording block a data block verified as being normal and subsequent blocks, the sink device requests the source device to retransmit the missing data block by initiating the retransmission process. In this way, discontinued data is prevented from being transferred to the content recording block.

To perform the commitment incremental move as shown in Figs. 20 and 23, the sink device needs to buffer the data, decrypted by the content decrypting block, in an invalid state until the commitment process has been completed with the source device.

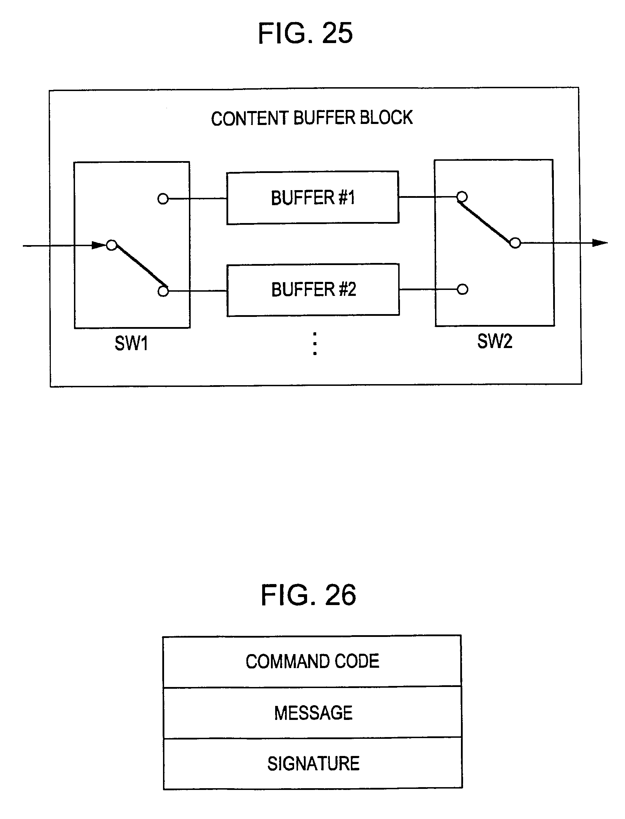

Fig. 25 illustrates a content buffer block having such a mechanism. As shown, the content buffer block includes at least one buffer memory for storing a given data unit in an invalid state. When the content reception from the source device or the recording operation is continuously performed, a plurality of buffer memories are successively switched during a period of a process of using the OK command.

When the decrypted data is input from the content decrypting block, a switch SW1 assigns the input data to each buffer memory on a per unit basis so that the input data is buffered in an invalid state. The content recording block receives via a switch SW2 a data unit that has completed a reception notification process in which the sink device has transmitted an OK command to the source device, and then stores the data unit in a valid state.

The move process can be canceled only when both the data on the content buffer block and the data written on the content recording block can be invalidated. If the data on the content buffer block is destroyed even with the data written on the content recording block remaining validated, the destroyed portion can be still cancelled.

The process requiring the data retransmission has previously discussed with reference to Fig. 24.

In the content transfer system of the present embodiment, the OK command and the cancel command have been defined to perform appropriately the incremental move. Fig. 26 illustrates a frame format of these commands.

A command code represents a type of command, and a parameter of each command is transmitted in a message. To prevent tampering, an electronic sign for the command code and the message is transmitted in a signature. Since the OK command transmitted from the sink device in the commitment incremental move deserves to be attacked, it is optional that no signature is used.

As a specific message, the OK command transmitted from the sink device in the commitment incremental move indicates the number of bytes within a range from the leading position to the trailing position of the received data. The cancel command transmitted from the sink device in the immediate and commitment incremental move indicates a cancel position by the number of bytes from the start of the content, thereby representing a cancel range starting at the cancel position.

A keyed hash value may be used as a signature. A predetermined calculation is made on a secret key shared by the source device and the sink device through an authentication and key exchange performed first, and the key hash value of the message and predetermined information is determined based on the calculated key. An initial value of a particular value known to the source device and the sink device may be used as the predetermined information.

Content duplication or content missing occurs if the sink device cannot verify that each of the OK command and the cancel command reliably reaches the source device. In practice, two-phase commitment process may be used to perform a single command process through a plurality of exchanges. When a plurality of exchanges are performed, the source device and the sink device increase, in synchronization, the value of the predetermined information to be hashed, thereby successively changing the predetermined information. The hash value generated in this way causes a third party to be unable to predict, and allows the source device and the sink device can authenticate each other. The transaction becomes safer.

It should be understood by those skilled in the art that various modifications, combinations, sub-combinations and alterations may occur depending on design requirements and other factors insofar as they are within the scope of the appended claims or the equivalents thereof.

## Claims

1. A content transfer system comprising a source device for transmitting content and a sink device for receiving the content, the sink device incrementally validating portions of data of the content received from the source device, and the source device incrementally invalidating the portions of the data of the content transmitted therefrom in order to move the content from the source device to the sink device.

2. The content transfer system according to claim 1, wherein the sink device invalidates at least a portion of the content data received from the source device and then validated, and issues a request to cancel the move of the portion of the content data, and
wherein the source device validates the once invalidated portion of the content data in response to the request to cancel.

3. The content transfer system according to claim 1, wherein the source device invalidates transmitted content data in response to a predetermined commitment process from the sink device, the commitment process indicating that the sink device has received the content data.

4. The content transfer system according to claim 3, wherein the sink device transmits a reception acknowledgement command specifying a range of content data that has been received from the source device and then validated, and
wherein the source device invalidates the specified range of content data in response to the reception acknowledgment command.

5. The content transfer system according to claim 3, wherein the sink device invalidates a portion of the received content data that has been validated through the commitment process and requests the source device to cancel the move of the portion of the content data, and
wherein the source device validates the transmitted data, once invalidated through the commitment process, in response to the cancel request.

6. A content transfer device operating as a source device for transmitting content in accordance with the digital transmission content protection (DTCP) specification in order to move the content to a sink device, the content transfer device comprising:
authentication means for performing an authentication and key exchange (AKE) process with the sink device;
data transfer means for encrypting and transmitting data of the content to the sink device using a key exchanged by the authentication means; and
data invalidating means for incrementally invalidating portions of the content data transmitted by the data transfer means.

7. The content transfer device according to claim 6, further including data validating means for validating once invalidated content data in response to a move cancel request from the sink device.

8. The content transfer device according to claim 6, wherein the data invalidating means invalidates content data, transmitted by the data transfer means, in response to a predetermined commitment process indicating that the data has been received by the sink device.

9. The content transfer device according to claim 8, wherein the data invalidating means invalidates the content data, transmitted by the data transfer means, in response to a reception acknowledgment command received from the sink device specifying a range of validated content data.

10. The content transfer device according to claim 8, further comprising data validating means for validating the content data, once invalidated through the commitment process, in response to a move cancel request from the sink device.

11. A content transfer device operating as a sink device for receiving content in accordance with the digital transmission content protection (DTCP) specification in order to move the content from a source device, the content transfer device comprising:
authentication means for performing an authentication and key exchange (AKE) process with the source device;
data receiving means for receiving data of the content from the source device using a key exchanged by the authentication means; and
data validating means for validating incrementally portions of the content data received by the data receiving means.

12. The content transfer device according to claim 11, further comprising:
data invalidating means for invalidating at least a portion of the content data validated by the data validating means; and
move cancel requesting means for requesting the source device to cancel the move of the content data invalidated by the data invalidating means.

13. The content transfer device according to claim 11, further comprising commitment process means for performing a predetermined commitment process to indicate to the source device that the content data has been received,
wherein the data validating means validates the content data subsequent to the commitment process of the commitment process means.

14. The content transfer device according to claim 13, wherein the commitment process means transmits to the source device a reception acknowledgement command specifying a range of validated data.

15. The content transfer device according to claim 13, further comprising:
data invalidating means for invalidating at least a portion of the content data validated through the commitment process of the commitment process means; and
move cancel requesting means for requesting the source device to cancel the move of the content data invalidated by the data invalidating means.

16. A content transfer method of a DTCP compliant source device for transmitting content in order to move the content to a sink device, comprising steps of:
performing an authentication and key exchange (AKE) process with the sink device;
encrypting and transmitting data of the content to the sink device using an exchanged key; and
incrementally invalidating portions of the transmitted content data.

17. A content transfer method of a DTCP compliant sink device for receiving content in order to move the content from a source device, comprising steps of:
performing an authentication and key exchange (AKE) process with the source device;
receiving data of the content from the source device using an exchanged key; and
validating incrementally portions of the received content data.

18. A computer readable program for causing a computer system as a DTCP compliant source device to transmit content in order to move the content to a sink device, comprising steps of:
performing an authentication and key exchange (AKE) process with the sink device;
encrypting and transmitting data of the content to the sink device using an exchanged key; and
incrementally invalidating portions of the transmitted content data.

19. A computer readable program for causing a computer system as a DTCP compliant sink device to receive content in order to move the content from a source device, comprising steps of:
performing an authentication and key exchange (AKE) process with the source device;
receiving data of the content from the source device using an exchanged key; and
validating incrementally portions of the received content data.

20. A content transfer device operating as a source device for transmitting content in accordance with the digital transmission content protection (DTCP) specification in order to move the content to a sink device, the content transfer device comprising:
an authentication unit performing an authentication and key exchange (AKE) process with the sink device;
a data transfer unit encrypting and transmitting data of the content to the sink device using a key exchanged by the authentication unit; and
a data invalidating unit incrementally invalidating portions of the content data transmitted by the data transfer unit.

21. A content transfer device operating as a sink device for receiving content in accordance with the digital transmission content protection (DTCP) specification in order to move the content from a source device, the content transfer device comprising:
an authentication unit performing an authentication and key exchange (AKE) process with the source device;
a data receiving unit receiving data of the content from the source device using a key exchanged by the authentication unit; and
a data validating unit validating incrementally portions of the content data received by the data receiving unit.
